# EUROPÄISCHE PATENTANMELDUNG

(11) **EP 4 825 559 A1**
(43) Veröffentlichungstag der Anmeldung: **21.10.2026**
(21) Anmeldenummer: 25221916.7
(22) Anmeldetag: 09.12.2025
(51) Int. Cl.: B29C 48/08, B29C 48/00, B42D 25/369

(54) **VERFAHREN ZUM HERSTELLEN EINER FOLIE MIT EINEM SICHERHEITSMERKMAL FÜR EINEN KARTENFÖRMIGEN DATENTRÄGER, FOLIE, KARTENFÖRMIGER DATENTRÄGER UND EXTRUSIONSVORRICHTUNG**

(30) Priorität: 17.04.2025 DE 102025115095
(71) Anmelder: Giesecke+Devrient ePayments GmbH, 81677 München (DE)
(72) Erfinder: Fabian, Cristina, 81677 München (DE); Kohl, Klaus, 81677 München (DE); Sauer, Thorsten, 81677 München (DE); Riedl, Josef, 81677 München (DE)
(74) Vertreter: Giesecke+Devrient IP

(57) **Zusammenfassung**

Die Erfindung betrifft ein Verfahren zum Herstellen einer Folie (30) mit einem Sicherheitsmerkmal für einen kartenförmigen Datenträger (50), welches die folgenden Schritte aufweist:
- Bereitstellen von wenigstens einem Folienmaterial (101);
- Bereitstellen (102) von Effektpigmenten (52);
- Einbringen des Folienmaterials (103) in wenigstens einen Extruder (11) einer Extrusionsvorrichtung (10);
- Einbringen (104) der Effektpigmente (52) in wenigstens eine Beschleunigungsvorrichtung (13) der Extrusionsvorrichtung (10);
- Erhitzen (105) des Folienmaterials im Extruder (11) zur Ausbildung einer Schmelze (20);
- Extrudieren (106) der Schmelze (20) durch einen Düsenaustrittsspalt (12) der Extrusionsvorrichtung (10) zur Ausbildung einer Folie (30);
- Beschleunigen (107) der Effektpigmente (52) mittels der Beschleunigungsvorrichtung (13) derart, dass die Effektpigmente (52) von wenigstens einer Öffnung der Beschleunigungsvorrichtung (13) zur extrudierten Schmelze (20) transportiert werden und wenigstens teilweise in die extrudierte Schmelze (20) eindringen, wodurch die Effektpigmente (52) innerhalb der Folie (30) zur Ausbildung eines Sicherheitsmerkmals in der Folie (30) integriert sind; und
- Auskühlen (108) der Folie (30), um die Effektpigmente (52) innerhalb der Folie (30) zu fixieren.

Ferner betrifft die Erfindung eine Folie (30), einen kartenförmigen Datenträger (50) sowie eine Extrusionsvorrichtung (10).

## Beschreibung

Die Erfindung betrifft ein Verfahren zum Herstellen einer Folie mit einem Sicherheitsmerkmal für einen kartenförmigen Datenträger, eine Folie mit einem Sicherheitsmerkmal für einen kartenförmigen Datenträger, einen kartenförmigen Datenträger mit einer Folie und eine Extrusionsvorrichtung für die Herstellung einer Folie mit einem Sicherheitsmerkmal.

Aus dem Stand der Technik sind eine Vielzahl von kartenförmigen Datenträgern, beispielsweise Smart Cards, Chipkarten, insbesondere mit RFID-Technologie (Radio Frequency Identification), Integrated-Circuit-Cards, Dual-Interface-Karten oder Identifikationskarten, bekannt. Insbesondere die Verwendung von Smart Cards, wie beispielsweise Kreditkarten oder Bezahlkarten, hat sich zur Ausführung von finanziellen Transaktionen etabliert. Kartenförmige Datenträger wie Identitätsdokumente, beispielsweise Pass- und Ausweisdokumente, Ausweiskarten und dergleichen werden in steigendem Maß in öffentlichen Bereichen, aber auch im innerbetrieblichen Bereich eingesetzt.

Der kartenförmige Datenträger weist typischerweise einen Kartenkörper mit einer Modulöffnung zur Aufnahme eines Chipmoduls oder weitere elektronische Komponenten für eine kontaktbasierte und/oder kontaktlose Datenkommunikation auf. Häufig ist vorgesehen, dass der Kartenkörper aus mehreren Folien gebildet ist, wobei die einzelnen Folien mittels einer Lamination aufgrund von Druck und ,Wärme zu einem Folienschichtenverbund verbunden werden. An der Oberfläche des Kartenkörpers sind bevorzugt Designfolien oder transparente Deckfolien, sogenannte Overlay-Folien, mit Sicherheitsmerkmalen vorgesehen. Optische Sicherheitsmerkmale auf den kartenförmigen Datenträgern sind bekannt und sollen generell die Fälschungssicherheit erhöhen. Weiterhin ist es bekannt, dass Folien für kartenförmige Datenträger mittels eines Extrusionsverfahrens hergestellt werden können.

Damit die Fälschungssicherheit weiterhin verbessert werden kann, ist es wünschenswert, dass die Sicherheitsmerkmale in die Folie integriert werden, anstatt nur an der Oberfläche der Folie angeordnet zu werden. Wenn die Folie mittels eines Extrusionsverfahrens hergestellt wird, müssten die Sicherheitsmerkmale den hohen Temperaturen des Extrusionsverfahrens von typischerweise wenigstens 200 °C standhalten können. Folglich ist die Auswahl an Sicherheitsmerkmalen stark limitiert.

Aufgabe der vorliegenden Erfindung ist es, die Herstellung von Folien mit Sicherheitsmerkmalen für kartenförmige Datenträger zu verbessern.

Diese Aufgabe wird durch ein Verfahren zum Herstellen einer Folie mit einem Sicherheitsmerkmal für einen kartenförmigen Datenträger, einer Folie mit einem Sicherheitsmerkmal, einem kartenförmigen Datenträger beziehungsweise einer Extrusionsvorrichtung gemäß den unabhängigen Patentansprüchen gelöst. Ausgestaltungen und Weiterbildungen der Erfindung sind in den abhängigen Ansprüchen angegeben. Dabei gelten Merkmale und Details, die im Zusammenhang mit dem erfindungsgemäßen Verfahren zum Herstellen einer Folie mit einem Sicherheitsmerkmal für einen kartenförmigen Datenträger beschrieben sind, auch im Zusammenhang mit der erfindungsgemäßen Folie mit einem Sicherheitsmerkmal, dem kartenförmigen Datenträger und der Extrusionsvorrichtung und jeweils umgekehrt, sodass bezüglich der Offenbarung zu den einzelnen Erfindungsaspekten stets wechselseitig Bezug genommen werden kann.

Im Rahmen der Anmeldung kann die Erfindung bevorzugt für Smart Cards, insbesondere für Debitkarten und Bezahlkarten, verwendet werden. Es kann aber auch eine Verwendung für andere RFID-Vorrichtungen, wie beispielsweise Zugangskarten, Token, oder Sicherheitsausweise, vorgesehen sein. Bevorzugt ist im Rahmen der Anmeldung eine Verwendung der Erfindung in Bezug auf den Passsektor, insbesondere für Ausweisdokumente oder Führerscheine, vorgesehen.

Gemäß einem Aspekt der Erfindung wird ein Verfahren zum Herstellen einer Folie mit einem Sicherheitsmerkmal für einen kartenförmigen Datenträger offenbart, welches die folgenden Schritte aufweist:
- Bereitstellen von wenigstens einem Folienmaterial;
- Bereitstellen von Effektpigmenten;
- Einbringen des Folienmaterials in wenigstens einen Extruder einer Extrusionsvorrichtung;
- Einbringen der Effektpigmente in wenigstens eine Beschleunigungsvorrichtung der Extrusionsvorrichtung;
- Erhitzen des Folienmaterials im Extruder zur Ausbildung einer Schmelze;
- Extrudieren der Schmelze durch einen Düsenaustrittsspalt der Extrusionsvorrichtung zur Ausbildung einer Folie;
- Beschleunigen der Effektpigmente mittels der Beschleunigungsvorrichtung derart, dass die Effektpigmente von wenigstens einer Öffnung der Beschleunigungsvorrichtung zur extrudierten Schmelze transportiert werden und wenigstens teilweise in die extrudierte Schmelze eindringen, wodurch die Effektpigmente innerhalb der Folie zur Ausbildung eines Sicherheitsmerkmals in der Folie integriert sind; und
- Auskühlen der Folie, um die Effektpigmente innerhalb der Folie zu fixieren.

Die Reihenfolge der Schritte des erfindungsgemäßen Verfahrens ist nicht notwendigerweise auf die beschriebene Reihenfolge beschränkt oder zeitlich festgelegt.

Im Rahmen der Anmeldung ist es generell denkbar, dass eine Ko-Extrusion für die auszubildende Folie verwendet wird. Beispielsweise kann hierbei ein erstes Folienmaterial und ein zweites Folienmaterial oder generell mehrere verschiedene Folienmaterialien bereitgestellt werden. Das erste Folienmaterial kann in einem Hauptextruder der Extrusionsvorrichtung und das zweite Folienmaterial kann in einem Nebenextruder der Extrusionsvorrichtung eingebracht und erhitzt werden. Die erste Schmelze und die zweite Schmelze können dann durch den Düsenaustrittsspalt der Extrusionsvorrichtung ko-extrudiert werden, wodurch eine mehrschichtige Folie ausgebildet werden kann.

Im Rahmen der Anmeldung kann beispielsweise das Folienmaterial als Granulat für den Extruder bereitgestellt werden, insbesondere als Kunststoffgranulat. Im Extruder kann das eingebrachte Folienmaterial zur Ausbildung einer Schmelze erhitzt bzw. aufgeschmolzen werden. Mit anderen Worten wird das Folienmaterial in einen geschmolzenen Zustand überführt. Die Schmelze kann anschließend durch den Düsenaustrittspalt extrudiert bzw. herausgepresst werden. Durch die Extrusion der Schmelze durch den Düsenaustrittspalt kann eine Folie ausgebildet werden. Der Düsenaustrittsspalt stellt hierbei eine formgebende Öffnung dar.

Im Rahmen der Anmeldung können die Effektpigmente beispielsweise in Pulverform bereitgestellt werden. Die Effekte können in die Beschleunigungsvorrichtung eingebracht, beispielsweise geschüttet werden. Mittels der Beschleunigungsvorrichtung ist insbesondere vorgesehen, dass die Effektpigmente von der Beschleunigungsvorrichtung zu der extrudierten Schmelze transportiert werden können. Die Beschleunigungsvorrichtung weist hierzu bevorzugt wenigstens eine entsprechende Öffnung auf. Mit anderen Worten werden die Effektpigmente mittels der Beschleunigungsvorrichtung beschleunigt bzw. erfahren eine Geschwindigkeitsveränderung. Durch die Beschleunigung der Effektpigmente können die Effektpigmente nicht nur zu der extrudierten Schmelze transportiert werden, sondern haben auch eine ausreichend hohe Geschwindigkeit, dass sie wenigstens teilweise, insbesondere vollständig, in die extrudierte Schmelze eindringen können. Durch das Eindringen der Effektpigmente in die extrudierte Schmelze können die Effektpigmente in der ausgebildeten Folie integriert werden. Bevorzugt ist im Rahmen der Anmeldung vorgesehen, dass die Effektpigmente innerhalb der Folie integriert sind und nicht an der Oberfläche der Folie. Durch diese Integration der Effektpigmente innerhalb der Folie wird ein Sicherheitsmerkmal für die Folie ausgebildet.

Die extrudierte Schmelze kann üblicherweise in einem bestimmten Zeitintervall nach dem Austritt aus dem Düsenaustrittsspalt auskühlen bzw. vollständig erstarren. Durch das Auskühlen der Folie können die Effektpigmente innerhalb der Folie fixiert werden. Mit anderen Worten weisen die Effektpigmente innerhalb der Folie eine fixierte Position auf. Durch das Erstarren der Folie kann die Folie eine Art feste Matrix um die Effektpigmente bilden, sodass diese fixiert werden. Folglich kann das Sicherheitsmerkmal der Effektpigmente dauerhaft in die Folie integriert werden. Für die Auskühlung kann die extrudierte Schmelze beispielsweise an einer an den Düsenaustrittspalt angrenzenden Walzenanordnung umfassend wenigstens eine Kühlwalze gefördert werden.

Im Rahmen der Anmeldung kann die Walzenanordnung bevorzugt mehrere Walzen umfassen, welche gekoppelt bzw. hintereinander angeordnet sein können. Insbesondere können eine oder mehrere Kühlwalzen, Förderwalzen oder Wickelwalzen vorgesehen sein. Die Anzahl der Walzen der Walzenanordnung kann dabei spezifisch an die Folienherstellung, insbesondere an den Auskühlprozess der Folie, angepasst sein. Es können je nach Bedarf auch heizbare Walzen vorgesehen werden. Weiterhin kann bevorzugt vorgesehen sein, dass die Walzenanordnung wenigstens eine Prägewalze umfasst. Beispielsweise kann die Kühlwalze ebenso als Prägewalze ausgebildet sein und eine Prägung aufweisen, um diese Prägung entsprechend auf die auszubildende Folie zu übertragen. Insbesondere kann mittels einer Prägewalze eine Prägung der auszubildenden Folie vor deren kompletten Erstarrung realisiert werden.

Die Erfindung hat den Vorteil, dass die Effektpigmente ein Sicherheitsmerkmal darstellen, welches dauerhaft in der Folie integriert werden kann, wodurch die Fälschungssicherheit eines kartenförmigen Datenträgers mit einem derartigen Sicherheitsmerkmal signifikant erhöht wird. Dies hat den Vorteil, dass die Effektpigmente als Sicherheitsmerkmal durch Erstellen einer Fotokopie des kartenförmigen Datenträgers oder durch Scannen und
Drucken nicht reproduzierbar sind, selbst wenn die Kopie oder der Druck von höchster Qualität ist. Folglich kann eine unrechtmäßige Reproduktion des kartenförmigen Datenträgers verhindert werden und die Echtheit des kartenförmigen Datenträgers mittels des Sicherheitsmerkmals garantiert werden. Die erfindungsgemäße Verwendung der Beschleunigungsvorrichtung hat weiterhin den Vorteil, dass die Vielfalt der verwendeten Effektpigmente signifikant erhöht werden kann. Insbesondere können auch temperatursensible Effektpigmente verwendet werden, welche den hohen Temperaturen innerhalb des Extruders nicht standhalten würden und zerstört werden würden. Effektpigmente, welche zur Integration in der Folie bereits mit dem Folienmaterial vermischt in den Extruder eingebracht werden, müssen die Extrusionstemperaturen von wenigstens 200 °C aushalten können, ohne zu zerstören. Da jedoch erfindungsgemäß vorgesehen ist, dass die Effektpigmente mittels der Beschleunigungsvorrichtung in die bereits extrudierte Schmelze eindringen, hat sich die Temperatur der extrudierten Schmelze im Vergleich zur Temperatur der Schmelze innerhalb des Extruders bereits verringert. Folglich kann die Auswahl an zu verwendenden Effektpigmenten erweitert und vergrößert werden. Im Rahmen der Anmeldung ist insbesondere vorgesehen, dass die extrudierte Schmelze beim Eindringen der Effektpigmente noch einen schmelzefähigen bzw. flüssigen Zustand oder mit anderen Worten einen teilweise erstarrten Zustand aufweist. Somit ist sichergestellt, dass die Effektpigmente in die Folie integriert werden können.

Weiterhin kann der Vorteil erzielt werden, dass durch die Integration der Effektpigmente innerhalb der Folie ein Folienverbund mit dieser Folie und anderen Folien verbessert werden kann, da die Pigmente nicht an der Oberfläche der Folie mittels einer Druckfarbe angeordnet werden müssen.

In einer besonders bevorzugten Ausführungsform kann vorgesehen sein, dass die Beschleunigungsvorrichtung wenigstens eine Druckluftvorrichtung umfasst. Bevorzugt können mehrere Druckluftvorrichtungen vorgesehen werden. Mittels einer Druckluftvorrichtung kann auf einfache und kostengünstige Art die Beschleunigung der Effektpigmente realisiert werden. Im Rahmen der Anmeldung sind generell weitere Arten möglich, eine Beschleunigung der Effektpigmente zu realisieren, wie beispielsweise mittels einer magnetischen Beschleunigung oder generell gravitativ. Die Verwendung einer Druckluftvorrichtung hat insbesondere den Vorteil, dass mittels des Drucks die Beschleunigung der Effektpigmente präzise eingestellt werden kann. Mit anderen Worten kann präzise eingestellt werden, wie tief die Effektpigmente in die extrudierte Schmelze und damit in die auszubildende Folie eindringen. Insbesondere kann mittels des Drucks der Druckluftvorrichtung eine Eindringtiefe der Effektpigmente in die extrudierte Schmelze variabel gesteuert bzw. eingestellt werden. Mittels der Anzahl der Druckluftvorrichtung und/oder mittels der Breite der jeweiligen Druckluftvorrichtung kann bevorzugt eine Flächenverteilung der Effektpigmente in der extrudierten Schmelze bzw. der auszubildenden Folie eingestellt werden.

Vorzugsweise kann vorgesehen sein, dass die Druckluftvorrichtung wenigstens eine Druckluftdüse, insbesondere eine Blasdüse oder eine Flachstrahldüse oder eine Vollstrahldüse, oder eine Mehrkanaldüse umfasst. Die Verwendung von Druckluftdüsen hat den Vorteil, dass sie zur konzentrierten, zielgerichteten Ausbringung von Luft oder Sattdampf eingesetzt werden können. Insbesondere die Verwendung von Mehrkanaldüsen hat den Vorteil, dass diese geräuscharm und sparsam im Luftverbrauch sind. Generell ist im Rahmen der Anmeldung denkbar, dass die Ausbildung der Druckluftdüsen sowie deren Anzahl flexibel an die gewünschte Verteilung der Effektpigmente in der auszubildenden Folie angepasst werden kann. Generell können mehrere Typen von Druckluftdüsen kombiniert werden.

In einer bevorzugten Ausführungsform kann vorgesehen sein, dass die Extrusionsvorrichtung wenigstens einen Temperatursensor aufweist, wobei die Temperatur der extrudierten Schmelze bestimmt wird und/oder dass die Extrusionsvorrichtung wenigstens einen Geschwindigkeitssensor aufweist, wobei die Geschwindigkeit der Effektpigmente bestimmt wird, wobei die Extrusionsvorrichtung ferner wenigstens eine Prüfvorrichtung aufweist, welche dazu ausgebildet ist, empfangene Sensordaten auszuwerten, wobei eine Verteilung der Effektpigmente in der Folie bestimmt wird. Die Verwendung des Temperatursensors hat den Vorteil, dass gemessen und überprüft werden kann, ob die extrudierte Schmelze eine passende Temperatur aufweist, damit die Effektpigmente in die extrudierte Schmelze ohne Schaden zu nehmen eindringen können. Somit kann sichergestellt werden, dass die extrudierte Schmelze zum Zeitpunkt des Eindringens der Effektpigmente nicht zu heiß ist. Insbesondere können mehrere Temperatursensoren, beispielsweise entlang des Verlaufs bzw. der Bahn der extrudierten Schmelze vorgesehen werden. Es ergibt sich somit ein Temperaturverlauf entlang der Bahn der extrudierten Schmelze und der Zeitpunkt oder der Ort des Eindringens der Effektpigmente kann entsprechend angepasst und eingestellt werden. Die Verwendung des Geschwindigkeitssensors hat den Vorteil, dass gemessen und überwacht werden kann, ob die Effektpigmente eine ausreichend hohe Geschwindigkeit aufweisen, um in die extrudierte Schmelze einzudringen. Beispielsweise kann somit sichergestellt werden, dass die Effektpigmente nicht an der Oberfläche der extrudierten Schmelze verbleiben, sondern in die Schmelze bzw. Folie eindringen und integriert sind. Beispielsweise kann mittels der Geschwindigkeit der Effektpigmente die Eindringtiefe in die extrudierte Schmelze gemessen und überwacht werden. Es können mehrere Geschwindigkeitssensoren vorgesehen werden, beispielsweise entlang der Flugbahn der Effektpigmente hin zu der extrudierten Schmelze. Es ist generell denkbar, dass weitere Sensoren vorgesehen werden, um beispielsweise die Eindringtiefe der Effektpigmente in der extrudierten Schmelze zu bestimmen oder die Flächen- oder Volumenverteilung der Effektpigmente in der extrudierten Schmelze zu bestimmen. Zur Auswertung der Sensordaten ist insbesondere wenigstens eine Prüfvorrichtung vorgesehen. Die Prüfvorrichtung ist zur Übertragung der Sensordaten mit dem jeweiligen Sensor, insbesondere dem Temperatursensor und/oder dem Geschwindigkeitssensor, gekoppelt. Die Prüfvorrichtung ist dazu ausgebildet, die empfangenen Sensordaten auszuwerten. Damit kann bevorzugt eine Verteilung der Effektpigmente in der extrudierten Schmelze bzw. in der auszubildenden Folie bestimmt werden. Folglich kann die Ausbildung des Sicherheitsmerkmals des kartenförmigen Datenträgers überprüft werden. Beispielsweise kann überprüft werden, ob die Effektpigmente in dem gewünschten Muster oder Design in der extrudierten Schmelze bzw. in der auszubildenden Folie angeordnet werden.

Besonders bevorzugt kann vorgesehen sein, dass die Prüfvorrichtung mittels wenigstens einem trainierten maschinellen Lernmodell betrieben wird, insbesondere wobei die Prüfvorrichtung mit der Beschleunigungsvorrichtung gekoppelt ist. Bevorzugt kann vorgesehen sein, dass die Prüfvorrichtung ein trainiertes maschinelles Lernmodell, ein trainiertes neuronales Netzwerk und/ oder eine künstliche Intelligenz aufweist. Es ist bevorzugt vorgesehen, dass mittels des trainierten maschinellen Lernmodells oder mittels der künstlichen Intelligenz eine Einstellung von wenigstens einem Parameter der Beschleunigungsvorrichtung, wie beispielsweise der Stärke der Druckluft der Druckluftdüse zur Beschleunigung der Effektpigmente erfolgt. Hierzu ist die Prüfvorrichtung mit der Beschleunigungsvorrichtung gekoppelt. Folglich kann vorteilhafterweise die Beschleunigung der Effektpigmente variabel und präzise angepasst werden. Dies hat insbesondere den Vorteil, dass komplexe Muster für die Verteilung der Effektpigmente realisiert werden können und damit die Fälschungssicherheit weiter erhöht wird.

Insbesondere kann vorgesehen sein, dass die Effektpigmente eine Pigmentgröße von mindestens 10 nm und höchstens 100 µm aufweisen und/ oder pulverförmig ausgebildet sind und/oder verkapselt sind. Besonders bevorzugt ist im Rahmen der Anmeldung vorgesehen, dass die Größe der Effektpigmente abhängig von der Dicke der auszubildenden Folie gewählt wird. Beispielsweise kann die Größe der Effektpigmente wenigstens 5% und höchstens 95% der Dicke der auszubildenden Folie gewählt werden. Beispielhaft kann vorgesehen sein, dass die auszubildende Folie eine Dicke von 100 µm aufweist, wobei die Effektpigmente mit einer Größe von bis zu 95 µm vorgesehen werden könnten. In einem anderen bevorzugten Beispiel kann vorgesehen sein, dass zur Erzeugung von Füllmaterial für ein Fenster in der auszubildenden Folie eine Dicke von 600 µm vorgesehen sein kann, wobei hierbei auch größere Effektpigmente, beispielsweise mit einer Größe von 400 µm verwendet werden können. Eine pulverförmige Ausbildung der Effektpigmente ermöglicht vorteilhafterweise ein besonders einfaches Einbringen der Effektpigmente in die Beschleunigungsvorrichtung. Weiterhin ist die Auswahl an Pigmenten erhöht und somit kann die Herstellung der Folie flexibler gestaltet werden. Eine Verkapselung der Effektpigmente ermöglicht eine Verbesserung der Temperaturstabilität sowie der Langlebigkeit der Effektpigmente.

Bevorzugt kann vorgesehen sein, dass die Beschleunigungsvorrichtung im Bereich des Düsenaustrittspaltes der Extrusionsvorrichtung angeordnet ist. Dies hat den Vorteil, dass das Eindringen der Effektpigmente erfolgt, während die zu extrudierende Schmelze aufgrund des Düsenaustrittsspaltes in die Folienform überführt wird. Bevorzugt erfolgt das Eindringen der Effektpigmente, während die Schmelze noch in ihrem geschmolzenen Zustand ist. Bevorzugt kann vorgesehen sein, dass die Beschleunigungsvorrichtung unmittelbar angrenzend an den Düsenaustrittspalt angeordnet ist. Beispielhaft kann die Beschleunigungsvorrichtung direkt am Düsenaustrittspalt oder nachfolgend an den Düsenaustrittspalt angeordnet sein.

Besonders bevorzugt kann vorgesehen sein, dass die Beschleunigungsvorrichtung in Bezug auf die extrudierte Schmelze bewegt wird, insbesondere wobei die Beschleunigungsvorrichtung entlang einer vertikalen oder horizontalen Richtung bewegt wird oder wobei die Beschleunigungsvorrichtung in Bezug auf die Schmelze translatorisch und/oder rotatorisch bewegt wird. Dies hat insgesamt den Vorteil, dass durch die Bewegung verschiedene Muster oder Verteilungen der Effektpigmente innerhalb der Folie realisiert werden können. Bevorzugt kann die Beschleunigungsvorrichtung entlang einer Fließrichtung der Schmelze bewegt werden. Dies kann bevorzugt mit einer gleichmäßigen Geschwindigkeit erfolgen. Somit kann der Vorteil erzielt werden, dass das Eindringen der Effektpigmente in die extrudierte Schmelze gleichmäßig entlang der Fläche der auszubildenden Folie erfolgen kann. Beispielhaft kann ebenso vorgesehen sein, dass die Beschleunigungsvorrichtung quer zur Fließrichtung der Schmelze bewegt wird. Alternativ kann die Bewegung der Beschleunigungsvorrichtung aber auch in einer beliebigen Richtung erfolgen. Generell können die Art und die Richtung der Bewegung der Beschleunigungsvorrichtung an die gewünschte Verteilung der Effektpigmente innerhalb der Folie angepasst werden. Vorteilhafterweise kann vorgesehen sein, dass die Beschleunigungsvorrichtung beim Auskühlen der Folie von der Folie wegbewegt wird. Vorteilhafterweise kann vorgesehen sein, dass die Beschleunigungsvorrichtung in Bezug auf die Schmelze translatorisch und/oder rotatorisch bewegt wird. Die Bewegung der Beschleunigungsvorrichtung kann dabei an die gewünschte Verteilung der Effektpigmente angepasst sein. Beispielsweise können rotatorische und/oder translatorische Bewegungen, Rollenbewegungen, oszillierende Bewegungen oder Hin- und Her-Bewegungen vorgesehen sein. Dies ermöglicht die flexible und vielfältige Ausbildung von unterschiedlichen geometrischen Mustern der Effektpigmente in der Folie.

Alternativ oder zusätzlich kann vorgesehen sein, dass die Beschleunigungsvorrichtung variabel gesteuert ein- und/oder ausgeschaltet wird. Insbesondere kann die Beschleunigungsvorrichtung stromgesteuert ausgebildet sein und mit wenigstens einem Schaltelement für eine zeitliche Ein- und/oder Ausschaltung ausgebildet sein.

Besonders bevorzugt kann vorgesehen sein, dass die Effektpigmente fluoreszierende RGB Pigmente, Infrarotpigmente, Perlglanzpigmente, holographische Pigmente oder Schnipsel umfassen. Vorteilhafterweise stellen die genannten Pigment-Sorten ein Sicherheitsmerkmal aufgrund ihrer besonderen Eigenschaften dar. Insbesondere können auch Banknotenschnipsel als geschredderte Banknoten eingesetzt werden. Beispielsweise können auch geschredderte Sicherheitsfäden, geschredderte Hologramme oder geschredderte Patches als Effektpigmente verwendet werden. Weiterhin kann vorgesehen sein, dass die Effektpigmente eine Mischung aus verschiedenen Pigment-Sorten darstellen. Dies erhöht insbesondere die Fälschungssicherheit. Generell sind im Rahmen der Anmeldung jede Art von Effektpigmente denkbar, welche die Fälschungssicherheit erhöhen. Beispielsweise können die Effektpigmente lumineszierend, glitzernd oder thermochrom ausgebildet sein. Ebenso ist eine phosphoreszierende Ausbildung oder die Ausbildung als Magnetpigmente denkbar.

Es ist denkbar, dass die Effektpigmente kugelförmig oder bevorzugt plättchenförmig ausgebildet sind. Bevorzugt weisen die Effektpigmente eine irreguläre Form auf. Generell sind verschiedene geometrische Formen für die Effektpigmente denkbar. Weiterhin kann bevorzugt vorgesehen sein, dass die Effektpigmente verkapselt sind. Die Verkapselung schützt die Effektpigmente insbesondere vor Beschädigung und Alterung und macht die Effektpigmente noch temperaturstabiler. Folglich kann die Langlebigkeit und Beständigkeit der Folie mit dem Sicherheitsmerkmal der Effektpigmente weiter verbessert werden.

Bevorzugt kann vorgesehen sein, dass die Effektpigmente magnetische Pigmente umfassen. Besonders bevorzugt kann vorgesehen sein, dass die Effektpigmente ein ferromagnetisches Material, insbesondere Eisen, Nickel oder Kobalt, aufweisen. Insbesondere kann vorgesehen sein, dass die Effektpigmente inhärent magnetisch oder magnetisierbar ausgebildet sind. Mittels der Ausbildung als magnetische Pigmente lässt sich vorzugsweise eine magnetische Beschleunigung realisieren.

Insbesondere kann vorgesehen sein, dass die Beschleunigungsvorrichtung eine Magnetanordnung umfasst. Bevorzugt kann vorgesehen sein, dass mittels der Magnetanordnung ein zeitlich und/oder räumlich veränderliches oder ein statisches Magnetfeld erzeugt wird. Besonders bevorzugt kann vorgesehen sein, dass die Magnetanordnung wenigstens einen Elektromagneten umfasst. Insbesondere kann die Magnetanordnung einen oder mehrere Magnete aufweisen. Die Magnete können linear oder in einem vorbestimmten Muster in der Magnetanordnung angeordnet sein. Mittels der Magnete der Magnetanordnung kann ein Magnetfeld mit einer vorbestimmten Magnetfeldstärke und/oder Orientierung zur Beschleunigung der Effektpigmente erzeugt werden. Die Magnete können generell beispielsweise als Elektromagnete, Ferromagnete, insbesondere Hochleistungs-Ferromagnete, oder Neodym-Magnete ausgebildet sein. Die Erzeugung eines zeitlich und/oder räumlich veränderlichen Magnetfeldes hat den Vorteil, dass die Effektpigmente in einem spezifischen Designmuster, insbesondere einem Logo, bzw. in bestimmten geometrischen Mustern in der auszubildenden Folie verteilt werden können. Es können somit flexibel variable Designmöglichkeiten für die auszubildende Folie des kartenförmigen Datenträgers gewählt werden. Das zeitlich veränderliche Magnetfeld kann beispielhaft durch ein sukzessives Ein- und/oder Ausschalten der Magnetanordnung erzielt werden. Das räumlich veränderliche Magnetfeld kann beispielhaft durch ein Bewegen der Magnetanordnung in Bezug auf die extrudierte Schmelze erzielt werden.

Gemäß einem zweiten Aspekt der Erfindung wird eine Folie mit einem Sicherheitsmerkmal für einen kartenförmigen Datenträger bereitgestellt, welche durch das Verfahren nach einem der vorhergehenden Ausführungsformen hergestellt ist. Es gelten die gleichen Vorteile und Modifikationen wie zuvor beschrieben. Besonders bevorzugt kann vorgesehen sein, dass die Folie eine Dicke von 25 - 600 µm, vorzugsweise von 50 - 100 µm aufweist. Insbesondere kann die Folie transluzent ausgebildet sein, wobei die Effektpigmente die Farbe der Folie beeinflussen können. Beispielsweise kann die Folie mit dem Sicherheitsmerkmal in einen Folienverbund laminiert oder verklebt werden. Besonders bevorzugt kann die hergestellte Folie mit einem Sicherheitsmerkmal als Overlay-Folie für einen kartenförmigen Datenträger verwendet werden.

Gemäß einem dritten Aspekt der Erfindung wird ein kartenförmiger Datenträger, insbesondere eine Smart Card oder ein Identitätsdokument, bereitgestellt, aufweisend einen Kartenkörper, an welchem eine Folie mit einem Sicherheitsmerkmal nach einem der vorhergehenden Ausführungsformen angeordnet ist. Es gelten die gleichen Vorteile und Modifikationen wie zuvor beschrieben.

Gemäß einem vierten Aspekt der Erfindung wird eine Extrusionsvorrichtung für die Ausführung eines Verfahrens nach einem der vorhergehenden Ausführungsformen bereitgestellt, aufweisend wenigstens einen Extruder, wenigstens eine Beschleunigungsvorrichtung und wenigstens einen Düsenaustrittsspalt. Es gelten die gleichen Vorteile und Modifikationen wie zuvor beschrieben. Die Extrusionsvorrichtung kann in dem Verfahren zur Herstellung einer zuvor beschriebenen Folie mit einem Sicherheitsmerkmal verwendet werden.

Die vorliegende Erfindung wird nachfolgend mit Bezug auf die beiliegenden Figuren beispielhaft im Rahmen von Ausführungsformen beschrieben. Selbstverständlich können einzelne Merkmale der Ausführungsformen, sofern technisch sinnvoll, frei miteinander kombiniert werden, ohne den Rahmen der vorliegenden Erfindung zu verlassen. Elemente mit gleicher Funktion und Wirkungsweise sind in den Figuren mit denselben Bezugszeichen versehen. Die Figuren zeigen nachfolgend schematisch:
- Fig. 1:: eine schematische Ansicht für ein Verfahren zur Herstellung einer Folie mit einem Sicherheitsmerkmal für einen kartenförmigen Datenträger nach einem erfindungsgemäßen Ausführungsbeispiel;
- Fig. 2:: eine schematische Ansicht für eine Extrusionsvorrichtung zur Ausführung eines Verfahrens nach Fig. 1; und
- Fig. 3:: eine schematische Ansicht für einen kartenförmigen Datenträger mit einer Folie, welche mit einem Verfahren nach Fig. 1 hergestellt ist.

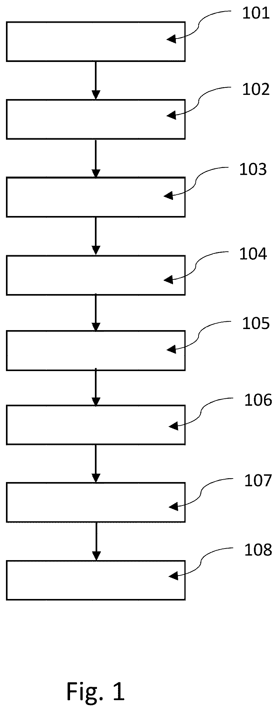

Figur 1 zeigt eine schematische Ansicht für ein Verfahren zur Herstellung einer Folie mit einem Sicherheitsmerkmal für einen kartenförmigen Datenträger nach einem erfindungsgemäßen Ausführungsbeispiel. Figur 1 veranschaulicht schematisch die einzelnen Verfahrensschritte, jedoch sind die einzelnen Komponenten des Verfahrens nicht im Detail dargestellt. Die Reihenfolge der Verfahrensschritte ist nicht notwendigerweise auf die gezeigte Reihenfolge festgelegt. Das Verfahren wird beispielhaft mittels einer Extrusionsvorrichtung ausgeführt.

In einem ersten Verfahrensschritt 101 wird insbesondere ein Folienmaterial bereitgestellt. Das Folienmaterial kann beispielhaft als Kunststoffgranulat bereitgestellt werden. In einem zweiten Verfahrensschritt 102 werden Effektpigmente bereitgestellt. Die Effektpigmente können beispielhaft in Pulverform bereitgestellt werden. Es können bevorzugt fluoreszierende RGB Pigmente, Infrarotpigmente, Perlglanzpigmente, holographische Pigmente oder Schnipsel als Effektpigmente bereitgestellt werden. Weiterhin kann vorgesehen sein, dass die Effektpigmente eine Mischung aus verschiedenen Pigment-Sorten darstellen. Insbesondere sind die Effektpigmente verkapselt ausgebildet.

In einem dritten Verfahrensschritt 103 kann das Folienmaterial in einen Extruder der Extrusionsvorrichtung eingebracht werden. Ferner können in einem vierten Verfahrensschritt 104 die Effektpigmente in eine Beschleunigungsvorrichtung der Extrusionsvorrichtung eingebracht werden.

Im Extruder kann das Folienmaterial zur Ausbildung einer Schmelze in einem fünften Verfahrensschritt 105 erhitzt bzw. aufgeschmolzen werden. Die Schmelze kann anschließend in einem sechsten Verfahrensschritt 106 durch einen Düsenaustrittspalt der Extrusionsvorrichtung extrudiert bzw. herausgepresst werden, um eine Folie auszubilden. Der Düsenaustrittsspalt stellt hierbei eine formgebende Öffnung dar. In einem siebten Verfahrensschritt 107 werden die Effektpigmente mittels der Beschleunigungsvorrichtung derart beschleunigt, dass die Effektpigmente von einer Öffnung der Beschleunigungsvorrichtung zur extrudierten Schmelze transportiert werden und wenigstens teilweise in die extrudierte Schmelze eindringen, wodurch die Effektpigmente innerhalb der Folie zur Ausbildung eines Sicherheitsmerkmals in der Folie integriert sind. Mittels der Beschleunigungsvorrichtung ist insbesondere vorgesehen, dass die Effektpigmente von der Beschleunigungsvorrichtung zu der extrudierten Schmelze transportiert werden können. Durch die Beschleunigung der Effektpigmente können die Effektpigmente nicht nur zu der extrudierten Schmelze transportiert werden, sondern haben auch eine ausreichend hohe Geschwindigkeit, dass sie wenigstens teilweise, insbesondere vollständig, in die extrudierte Schmelze eindringen können. Durch das Eindringen der Effektpigmente in die extrudierte Schmelze können die Effektpigmente in der ausgebildeten Folie integriert werden.

In einem achten Verfahrensschritt 108 kann die Folie auskühlen, um die Effektpigmente innerhalb der Folie zu fixieren. Die extrudierte Schmelze kann üblicherweise in einem bestimmten Zeitintervall nach dem Austritt aus dem Düsenaustrittsspalt auskühlen bzw. vollständig erstarren. Die vollständig erstarrte bzw. ausgekühlte extrudierte Schmelze stellt insbesondere die ausgebildete Folie dar. Mit anderen Worten findet ein Auskühlen der extrudierten Schmelze zur Ausbildung der finalen Folie statt, um die Effektpigmente innerhalb der Folie in ihren Positionen und/oder Orientierungen zu fixieren. Folglich kann das Sicherheitsmerkmal der Effektpigmente dauerhaft in die Folie integriert werden.

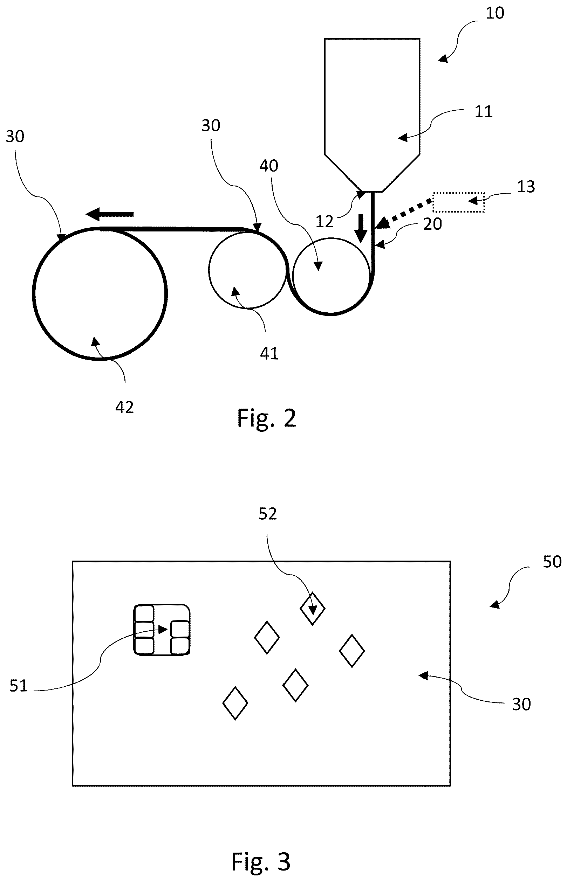

Figur 2 zeigt eine schematische Ansicht für eine Extrusionsvorrichtung 10 zur Ausführung eines Verfahrens nach Fig. 1. Insbesondere können mittels der Extrusionsvorrichtung 10 die gemäß Figur 1 genannten Verfahrensschritte ausgeführt werden. Die Extrusionsvorrichtung 10 weist hierzu den Extruder 11, den Düsenaustrittsspalt 12 und die Beschleunigungsvorrichtung 13 auf.

In den Extruder 11 wird das nicht dargestellte Folienmaterial eingebracht und anschließend aufgeschmolzen. Die extrudierte Schmelze 20 bzw. die aus dem Düsenaustrittspalt 12 austretende Schmelze 20 ist beispielhaft mittels der durchgehenden Linie dargestellt. Die extrudierte Schmelze 20 wird anschließend an den Düsenaustrittspalt 12 beispielhaft entlang der Pfeilrichtung gefördert.

Weiterhin sind die nicht dargestellten Effektpigmente 52 in die Beschleunigungsvorrichtung 13 eingebracht. Die Beschleunigungsvorrichtung 13 ist beispielhaft im Bereich des Düsenaustrittspaltes 12 der Extrusionsvorrichtung 10 angeordnet. Insbesondere ist die Beschleunigungsvorrichtung 13 in Fließrichtung der extrudierten Schmelze 20 angrenzend bzw. nachfolgend an den Düsenaustrittsspalt 12 angeordnet. Mittels der Beschleunigungsvorrichtung 13 ist insbesondere vorgesehen, dass die Effektpigmente 52 von der Beschleunigungsvorrichtung 13 zu der extrudierten Schmelze 20 transportiert werden können. Die Bewegung der Effektpigmente 52 von der Beschleunigungsvorrichtung 13 zur extrudierten Schmelze 20 sind illustrativ mit dem gestrichelten Pfeil veranschaulicht.

Die Beschleunigungsvorrichtung 13 weist eine entsprechende Öffnung auf, aus der die Effektpigmente 52 austreten können. Durch die Beschleunigung der Effektpigmente 52 können die Effektpigmente 52 nicht nur zu der extrudierten Schmelze 20 transportiert werden, sondern haben auch eine ausreichend hohe Geschwindigkeit, dass sie wenigstens teilweise, insbesondere vollständig, in die extrudierte Schmelze 20 eindringen können. Durch das Eindringen der Effektpigmente 52 in die extrudierte Schmelze 20 können die Effektpigmente 52 in der ausgebildeten Folie 30 integriert werden. Durch diese Integration der Effektpigmente 52 innerhalb der Folie 30 wird ein Sicherheitsmerkmal für die Folie 30 ausgebildet.

Beispielsweise weist die Beschleunigungsvorrichtung 13 eine nicht dargestellte Druckluftvorrichtung auf, welche insbesondere wenigstens eine Druckluftdüse umfasst. Mit anderen Worten wird die Beschleunigung der Effektpigmente 52 beispielhaft mittels Druckluft realisiert.

Weiterhin erfolgt das Auskühlen der extrudierten Schmelze 20 während der Förderung der extrudierten Schmelze 20 an einer Walzenanordnung. Mit anderen Worten wird die Folie 30 aus der extrudierten Schmelze 20 während der Förderung an der Walzenanordnung aufgrund von Auskühlung ausgebildet. Beispielhaft wird die extrudierte Schmelze 20 an einer an den Düsenaustrittsspalt 12 angrenzenden Walzenanordnung gefördert.

Die Walzenanordnung umfasst beispielhaft mehrere, insbesondere drei, Walzen 40, 41, 42, welche gekoppelt bzw. nebeneinander angeordnet sein können. Beispielhaft ist eine Kühlwalze 40, eine Wickelwalze 42 und eine Förderwalze 41 vorgesehen. Die Anzahl der Walzen 40, 41, 42 der Walzenanordnung kann dabei spezifisch an die Folienherstellung, insbesondere an den Auskühlprozess der extrudierten Schmelze 20 zur Folie 30, angepasst sein. Für die Auskühlung kann die extrudierte Schmelze 20 beispielsweise an der Kühlwalze 40 gefördert werden. Die Kühlwalze 40 grenzt dabei an den Düsenaustrittsspalt 12 an. Beispielhaft ist vorgesehen, dass die extrudierte Schmelze 20 über die Kühlwalze 40 gefördert wird und innerhalb der Förderung an der Kühlwalze 40 zur Ausbildung der Folie 30 im Wesentlichen vollständig auskühlt bzw. erstarrt. Weiterhin kann bevorzugt vorgesehen sein, dass die Walzenanordnung wenigstens eine Prägewalze umfasst. Beispielsweise kann die Kühlwalze ebenso als Prägewalze ausgebildet sein und eine Prägung aufweisen, um diese Prägung entsprechend auf die auszubildende Folie zu übertragen. Anschließend an die Kühlwalze 40 kann die ausgebildete Folie 30 über die Förderwalze 41 zu der Wickelwalze 42 gefördert werden und an der Wickelwalze 42 aufgewickelt werden. Die Beschleunigungsvorrichtung 13 ist beispielhaft zwischen dem Düsenaustrittspalt 12 und der Kühlwalze 40 angeordnet.

Vorteilhafterweise stellen die in der Folie 30 integrierten Effektpigmente 52 ein Sicherheitsmerkmal dar, welches dauerhaft in der Folie 30 integriert werden kann, wodurch die Fälschungssicherheit eines kartenförmigen Datenträgers 50 mit einem derartigen Sicherheitsmerkmal signifikant erhöht wird. Beispielhaft kann mittels des beschriebenen Verfahrens eine Folie 30 mit einem Sicherheitsmerkmal für einen kartenförmigen Datenträger 50 hergestellt werden.

Figur 3 zeigt eine schematische Ansicht für einen kartenförmigen Datenträger 50 mit einer Folie 30, welche mit einem Verfahren nach Fig. 1 hergestellt ist. Beispielhaft weist der kartenförmige Datenträger 50 die Folie 30 auf, welche mit der Extrusionsvorrichtung 10 gemäß Figur 2 und dem Verfahren gemäß Figur 1 hergestellt wurde.

Der kartenförmige Datenträger 50 ist beispielhaft als Smart Card, insbesondere als Dual-Interface-Karte, ausgebildet. Der kartenförmige Datenträger 10 weist einen rechteckigen Kartenkörper mit einer Oberfläche auf. Die Oberfläche wird durch die Folie 30 gebildet. Unterhalb der Folie 30 können noch weitere Folien angeordnet sein, wodurch der Kartenkörper als Folienschichtverbund ausgebildet ist. Der Kartenkörper weist ferner eine Modulöffnung zur Aufnahme eines Chipmoduls 51 auf, wobei das Chipmodul 51 in der Modulöffnung des Kartenkörpers angeordnet ist.

Das Chipmodul 51 weist einen nicht dargestellten Chip, eine Kontaktstruktur zur kontaktbasierten Datenkommunikation mit einem externen Lesegerät, und eine nicht dargestellte Antenne zur kontaktlosen Datenkommunikation mit dem externen Lesegerät auf. Insbesondere ist das Chipmodul somit beispielhaft als RFID-Modul ausgebildet.

Der kartenförmige Datenträger 50 weist ein Sicherheitsmerkmal auf. Insbesondere ist das Sicherheitsmerkmal in Form von Effektpigmenten 52 in der Folie 30 integriert. Die Effektpigmente 52 sind illustrativ mittels der Rauten dargestellt. Mittels des erfindungsgemäßen Verfahrens ist es möglich, auch temperatursensible Effektpigmente 52 im Rahmen eines Extrusionsverfahrens in die Folie 30 zu integrieren.

### Bezugszeichenliste

- 10: Extrusionsvorrichtung
- 11: Extruder
- 12: Düsenaustrittspalt
- 13: Beschleunigungsvorrichtung
- 20: Schmelze
- 30: Folie
- 40: Kühlwalze
- 41: Förderwalze
- 42: Wickelwalze
- 50: kartenförmiger Datenträger
- 51: Chipmodul
- 52: Effektpigmente
- 101: erster Verfahrensschritt
- 102: zweiter Verfahrensschritt
- 103: dritter Verfahrensschritt
- 104: vierter Verfahrensschritt
- 105: fünfter Verfahrensschritt
- 106: sechster Verfahrensschritt
- 107: siebter Verfahrensschritt
- 108: achter Verfahrensschritt

## Patentansprüche

1. Verfahren zum Herstellen einer Folie (30) mit einem Sicherheitsmerkmal für einen kartenförmigen Datenträger (50), welches die folgenden Schritte aufweist:
- Bereitstellen von wenigstens einem Folienmaterial (101);
- Bereitstellen (102) von Effektpigmenten (52);
- Einbringen des Folienmaterials (103) in wenigstens einen Extruder (11) einer Extrusionsvorrichtung (10);
- Einbringen (104) der Effektpigmente (52) in wenigstens eine Beschleunigungsvorrichtung (13) der Extrusionsvorrichtung (10);
- Erhitzen (105) des Folienmaterials im Extruder (11) zur Ausbildung einer Schmelze (20);
- Extrudieren (106) der Schmelze (20) durch einen Düsenaustrittsspalt (12) der Extrusionsvorrichtung (10) zur Ausbildung einer Folie (30);
- Beschleunigen (107) der Effektpigmente (52) mittels der Beschleunigungsvorrichtung (13) derart, dass die Effektpigmente (52) von wenigstens einer Öffnung der Beschleunigungsvorrichtung (13) zur extrudierten Schmelze (20) transportiert werden und wenigstens teilweise in die extrudierte Schmelze (20) eindringen, wodurch die Effektpigmente (52) innerhalb der Folie (30) zur Ausbildung eines Sicherheitsmerkmals in der Folie (30) integriert sind; und
- Auskühlen (108) der Folie (30), um die Effektpigmente (52) innerhalb der Folie (30) zu fixieren.

2. Verfahren nach Anspruch 1, **dadurch gekennzeichnet, dass** die Beschleunigungsvorrichtung (13) wenigstens eine Druckluftvorrichtung umfasst.

3. Verfahren nach Anspruch 2, **dadurch gekennzeichnet, dass** die Druckluftvorrichtung wenigstens eine Druckluftdüse, insbesondere eine Blasdüse oder eine Flachstrahldüse oder eine Vollstrahldüse, oder eine Mehrkanaldüse umfasst.

4. Verfahren nach einem der vorhergehenden Ansprüche, **dadurch gekennzeichnet, dass** die Extrusionsvorrichtung (10) wenigstens einen Temperatursensor aufweist, wobei die Temperatur der extrudierten Schmelze (20) bestimmt wird und/oder dass die Extrusionsvorrichtung (10) wenigstens einen Geschwindigkeitssensor aufweist, wobei die Geschwindigkeit der Effektpigmente (52) bestimmt wird, wobei die Extrusionsvorrichtung (10) ferner wenigstens eine Prüfvorrichtung aufweist, welche dazu ausgebildet ist, empfangene Sensordaten auszuwerten, wobei eine Verteilung der Effektpigmente (52) in der Folie (30) bestimmt wird.

5. Verfahren nach Anspruch 4, **dadurch gekennzeichnet, dass** die Prüfvorrichtung mittels wenigstens einem trainierten maschinellen Lernmodell betrieben wird, insbesondere wobei die Prüfvorrichtung mit der Beschleunigungsvorrichtung (13) gekoppelt ist.

6. Verfahren nach einem der vorhergehenden Ansprüche, **dadurch gekennzeichnet, dass** die Effektpigmente (52) eine Pigmentgröße von mindestens 10 nm und höchstens 100 µm aufweisen und/oder pulverförmig ausgebildet sind und/oder verkapselt sind.

7. Verfahren nach einem der vorhergehenden Ansprüche, **dadurch gekennzeichnet, dass** die Beschleunigungsvorrichtung (13) im Bereich des Düsenaustrittspaltes (12) der Extrusionsvorrichtung (10) angeordnet ist.

8. Verfahren nach einem der vorhergehenden Ansprüche, **dadurch gekennzeichnet, dass** die Beschleunigungsvorrichtung (13) in Bezug auf die extrudierte Schmelze (20) bewegt wird, insbesondere wobei die Beschleunigungsvorrichtung (13) entlang einer vertikalen oder horizontalen Richtung bewegt wird oder wobei die Beschleunigungsvorrichtung (13) in Bezug auf die Schmelze (20) translatorisch und/oder rotatorisch bewegt wird.

9. Verfahren nach einem der vorhergehenden Ansprüche, **dadurch gekennzeichnet, dass** die Beschleunigungsvorrichtung (13) variabel gesteuert ein- und/oder ausgeschaltet wird.

10. Verfahren nach einem der vorhergehenden Ansprüche, **dadurch gekennzeichnet, dass** die Effektpigmente (52) fluoreszierende RGB Pigmente, Infrarotpigmente, Perlglanzpigmente, holographische Pigmente oder Schnipsel umfassen.

11. Verfahren nach einem der der vorhergehenden Ansprüche, **dadurch gekennzeichnet, dass** die Effektpigmente (52) magnetische Pigmente umfassen.

12. Verfahren nach Anspruch 11, **dadurch gekennzeichnet, dass** die Beschleunigungsvorrichtung (13) eine Magnetanordnung umfasst.

13. Verfahren nach Anspruch 12, **dadurch gekennzeichnet, dass** mittels der Magnetanordnung ein zeitlich und/oder räumlich veränderliches oder ein statisches Magnetfeld erzeugt wird.

14. Folie (30) mit einem Sicherheitsmerkmal für einen kartenförmigen Datenträger (50), welche durch das Verfahren nach einem der Ansprüche 1 bis 13 hergestellt ist.

15. Kartenförmiger Datenträger (50), insbesondere eine Smart Card oder ein Identitätsdokument, aufweisend einen Kartenkörper, an welchem eine Folie (30) mit einem Sicherheitsmerkmal nach Anspruch 14 angeordnet ist.

16. Extrusionsvorrichtung (10) für die Ausführung eines Verfahrens nach einem der Ansprüche 1 bis 13, aufweisend wenigstens einen Extruder (11), wenigstens eine Beschleunigungsvorrichtung (13) und wenigstens einen Düsenaustrittsspalt (12).
